# EUROPEAN PATENT APPLICATION

(11) **EP 1 217 561 A2**
(43) Date of publication of application: **26.06.2002**
(21) Application number: 01130042.3
(22) Date of filing: 18.12.2001
(51) Int. Cl.: G06F 17/60

(54) **Clearing center for electronic post dated financial instruments**

(30) Priority: 20.12.2000 US 741386
(71) Applicant: Actrade Commerce Ltd., St. John's (AG)
(72) Inventor: Aharoni, Amos, New York, NY 10024 (US)
(74) Representative: Gervasi, Gemma, Dr.

(57) **Abstract**

Method and apparatus including a service center and a server for providing financial services and operations to makers and owners utilizing an electronic post dated financial instrument defined as an E-TAD.

## Description

### CROSS REFERENCE TO COPENDING APPLICATIONS

The present invention is a continuation-in-part of copending application S.N 09/688661 filed 10/16/00 and entitled APPARATUS AND METHOD FOR ELECTRONICALLY CREATING AND STORING AN ELECTRONIC POST DATED FINANCIAL INSTRUMENT.

### BACKGROUND OF THE INVENTION

A TAD is a financial instrument executed by a maker which is for a specific amount payable on a predetermined future date and drawn upon a specific account of the maker maintained at a specific bank.

An E-TAD is an electronic debit instrument which is the electronic equivalent of a TAD,

As explained in the copending application, in many commercial transactions, a buyer of goods/services would like to purchase same from a supplier but is unable or unwilling to make immediate complete payment for immediate delivery of these goods/services. Often these parties agree to accept any one of known types of financial instruments which when issued by the buyer contains entries identifying the buyer, the payee, the purchase amount, the buyer's bank, a due date and other data and also provides for deferred payment.. This document is transferred to the supplier who may sell it to others or upon the due date use the banking system to collect the payment from the buyer's bank.

The copending application disclosed a new type of document which can be electronically created and stored in a unique manner, and can be used more conveniently and efficiently by the same parties in place of the known types of financial instruments.

The present invention is directed toward a new type of service center identified as E-TAD clearing center. This center makes available many services and operations, through use of an electronically post dated financial document, to makers [which include buyers but also may include financial debtors] and owners [which include suppliers but also owners].

### SUMMARY OF THE INVENTION

In accordance with the principles of this invention, the center employs at least one server in which any maker or owner must be registered before a maker and/or owner can make use of the services and operation of the center. In order for a maker to register, the maker must have a specific account with a specific bank to whom the maker gives an authorization to use E-TADs. The maker must also provide an authorized signature which will be stored in the server and used for comparison with any E-TAD issued and signed by the maker.

Owners must also register with the server. The owner must also provide a sample of an authorized signature that will be stored in the server and used for comparison when the owner sells and endorses E-TADS to other registered owners. As will be explained in more detail hereinafter, an E-Tad in electronically stored form may be sold by endorsement from one owner to another.

All pertinent data concerning registered makers and owners is stored in separate maker and owner sections of a server of the center. Registered makers have internet access via their computers to the server to enable them to find registered owners as suitable parties for E-TAD payment.

A registered maker and a registered owner must first negotiate an agreement concerning a proposed transaction before utilizing the services of the center. This agreement will utilize one or more E-TADs. Each E-TAD must contain data which identifies the maker, an owner who is the payee, a dollar amount following the name of the payee, a due date, a bank, an address for the bank, and an electronic collection method. The bank address can be an ABA number address. The electronic collection method can be encoding, ACH, SWIST wire or other methods.

In use, the maker via his computer sends to the server a request for creating and storing said data and to create this record and to assign to it a unique identification number and a unique area in which the data is stored.

The server responds by storing and creating the data and creating the record, and assigns the said number and said area. The server then forwards an electronic image of the record, including the assigned number and area, to the computer for displaying this image.

The maker, after reviewing and approving the image, accepts the deferred payment obligation by electronically affixing his signature thereto and then forwards this signature via the computer to the server. The server compares the signature forwarded by the maker to the signature stored in the server. If the signature is authenticated by the comparison, the server adds the signature to the stored record and electronically seals it, thereby creating the desired electronically sealed E-TAD record. If the signature is not authenticated, an error message is displayed and the stored record is voided.

Each sealed E-TAD record has linked to it a corresponding E-TAD transcript which is a database container in the server. Each change in ownership or other events upon or after the formation of the electronically sealed record must be reported to the center and are then recorded in the transcript by the server. Since the payee identified in the record identifies the payee, the transcript is created as soon as the record is created and lists the payee as the first owner. All signatures of the owners must be compared as required with authorized signatures stored in the server.

The first owner can remain as the sole owner identified in the transcript and retain ownership of the stored E-TAD to maturity. At maturity, if not requested otherwise, the center opens the sealed E-TAD record, collects the funds from the maker's bank and transfer them to a bank identified by the first owner. The owner can request any time before the due date to receive the E-TAD as a hard copy. The center then prints out one hard copy of the stored E-TAD, tags the stored E-TAD as "DESTROYED", records the activity in the transcript and processes the hard copy as requested. Subsequent hard copies of the E-TAD cannot be produced other than for copy purposes with the marking "COPY" clearly and prominently marked on the face of the instrument..

Alternatively, the first owner can transfer its ownership of the stored E-TAD by endorsement to another owner and such transfers can be repeated. The endorsing owner must submit the endorsement and identification of the owner for entry in the server. The server will compare any signature of an owner which is submitted with the signature stored in the server. If the comparison is faulty, the server will not enter the endorsement Once the endorsement has been approved by comparison, the new owner is entered in appropriate time sequence in the transcript. The irrevocable E-TAD upon entry of the first endorsement becomes a negotiable instrument and each current owner of an identified endorsement in the transcript becomes a holder in due course.

On the due date, if not requested otherwise, the center opens the sealed E-TAD record, collects the funds from the marker's bank and transfers them to a bacnk account identified by the last owner.

Any present owner prior to the due date can request the center to provide this owner with a hard copy of the endorsed record and the center will provide same, tag the endorsed E-TAD as "DESTROYED" and record this activity in the transcript of the endorsed record. and destroy the stored endorsed record.

### BRIEF DESCRIPTION OF THE DRAWINGS

Figure 1 is a block diagram illustrating apparatus and method for forming an electronically sealed E-TAD record and associated E-TAD transcript.

Figure 2 is a detailed view of this record and transcript.

Figure 3 is a block diagram of the collection process.

### DETAILED DESCRIPTION OF PREFERRED EMBODIMENT

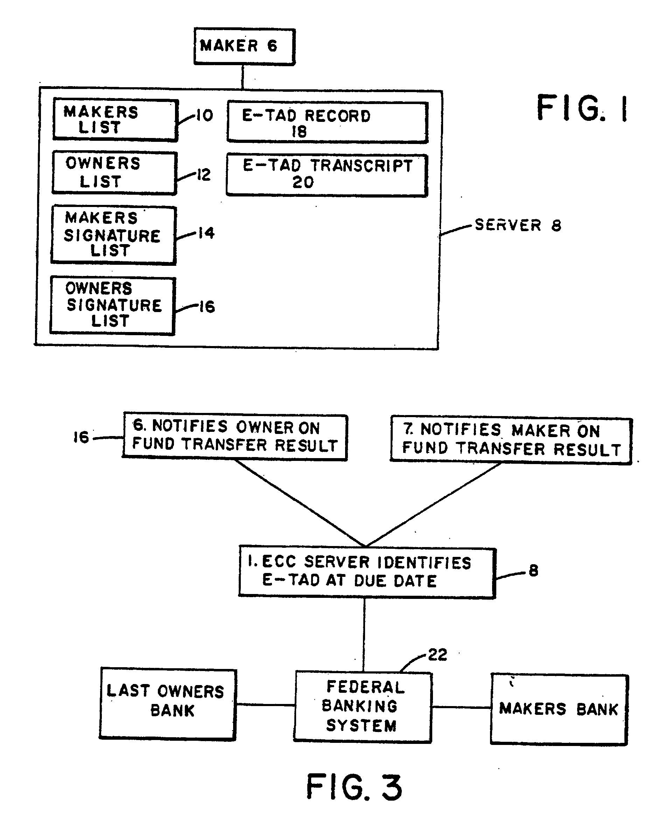

Referring first to Figure 1, server 8 contains a separate data list of registered makers 10, a separate list of registered owners 12, a separate list of authorized signatures of registered makers 14 and a separate list of authorized signatures of registered owners 16..

After a registered maker has completed a negotiation with a registered owner involving issuance and acceptance of E-TADs, maker 6 sends a request via his computer to the server to prepare an electronically sealed E-TAD electronic record. The request and responses have been previously described as above. The server forms and seals this record at 18 and also forms the corresponding E-TAD transcript 20.

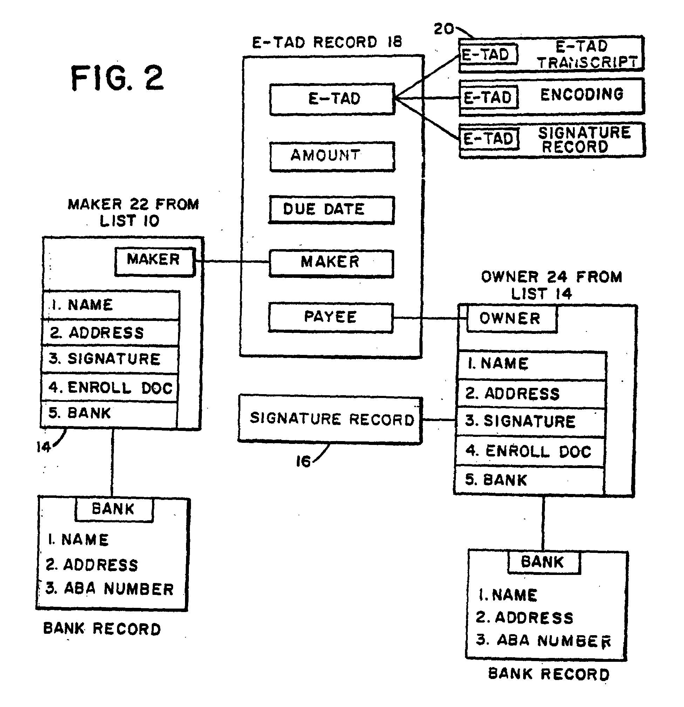

Referring now to Figure 2, the contents of record 18 and transcript 20 for a maker 22 and an owner 24 who have previously completed a negotiation and are using record 18 and transcript 20 are shown utilizing signature and bank records.

Referring now to Figure 3, the server 8 identifies the E-TAD on due date and forwards an appropriately encoded hard copy of the E-TAD, tagging the record 18 and transcript 20, through the Federal Banking System 22 for collection to debit the amount of the E-TAD in the maker's bank and credit this amount to the last owners bank and then informs the maker and the last owner.

When Federal and State banking laws permit, the server will not destroy the record 18 and transcript 20, but instead will forward the E-TAD through the Federal Banking System for collection..

While the invention has been described with particular reference to the drawings and detailed description, the protection solicited is to be limited only by the terms of the claims which follow.

## Claims

1. Apparatus including a service center and a server for providing financial services and operations to makers and owners utilizing an electronic post dated financial instrument defined as an E-TAD, said apparatus comprising:
a service center;
a server controlled by said center;
first means utilizing the center and server to obtain, qualify and store names of registered makers authorized after registration to use E-TADS in a first maker designated list in the server;
second means utilizing the center and server to obtain and store authorized signatures of registered makers in a second maker signature designated list in the server,
third means utilizing the center and server to obtain, qualify and store names of registered owners authorized after registration to use E-TADS in a third owner designated list in the server; and
fourth means utilizing the center and server to obtain and store authorized signatures of registered makers in a third owner signature designated list in the server.

2. Apparatus as set forth in claim 1 further including:
fifth means utilizing the server responsive to a request of a registered maker to electronically create and store E-TADS in an electronic record containing data which identifies a maker, a payee, a dollar amount following the name of the payee, a due date, a bank, an address for the bank, and an electronic collection method, said fifth means and responding to said request by creating said record and assigning to it a unique identification number and a unique storage area in which said data is stored.

3. Apparatus as set forth in claim 2 further including sixth means including a computer operated by the maker and electronically connected to said fifth means for said maker to initiate said request and forward it to said fifth means.

4. Apparatus as set forth in claim 3 wherein said fifth means, after creating and storing said data in the server and assigning said number and area thereto forwards an electronic image of said record to said computer for viewing by said maker.

5. Apparatus as set forth in claim 4 wherein said maker, after viewing and approving said image electronically, signs said image with his signature and forwards this signature via said computer to said fifth means, whereby the fifth means compares the signed signature with the authorized signature in the second list and when this comparison authenticates the signed signature, seals the record, the sealed record being accessible only when used to produce an original hard copy and being destroyed when said hard copy is produced.

6. Apparatus as set forth in claim 5 wherein said fifth means after sealing the record creates a corresponding stored electronic transcript listing the payee as first owner.

7. A method utilizing a service center and a server for providing financial services and operations to makers and owners utilizing an electronic post dated financial instrument defined as an E-TAD, said method comprising the steps of:
[a] utilizing the center and server to obtain, qualify and store names of registered makers authorized after registration to use E-TADS in a first maker designated list in the server;
[b] utilizing the center and server to obtain and store authorized signatures of registered makers in a second maker signature designated list in the server;
[c] utilizing the center and server to obtain, qualify and store names of registered owners authorized after registration to use E-TADS in a third owner designated list in the server; and
[d] utilizing the center and server to obtain and store authorized signatures of registered makers in a third owner signature designated list in the server.

8. The method of claim 7 further including the steps of:
[e] utilizing the server responsive to a request of a registered maker to electronically create and store E-TADS in an electronic record containing data which identifies a maker, a payee, a dollar amount following the name of the payee, a due date, a bank, an address for the bank, and an electronic collection method;
[f] utilizing the server to respond to said request by creating said record and assigning to it a unique identification number and a unique storage area in which said data is stored.

9. The method of claim 8 as set forth in claim 2 further including the step of:
[g] enabling computer operated by the maker and electronically connected to said server for said maker to initiate said request and forward it to said server.

10. The method of claim 8 wherein said step [f], after utilizing the server to create and store said data and assigning said number and area thereto forwards an electronic image of said record to said computer for viewing by said maker.

11. The method of claim 10 wherein said maker, after viewing and approving said image electronically, signs said image with his signature and forwards this signature via said computer to said server, whereby the server compares the signed signature with the authorized signature in the second list and when this comparison authenticates the signed signature, seals the record, the sealed record being accessible only when used to produce an original hard copy and being destroyed when said hard copy is produced.

12. The method of claim 11 wherein said server after sealing the record creates a corresponding stored electronic transcript listing the payee as first owner.
